# EUROPÄISCHE PATENTANMELDUNG

(11) **EP 3 978 215 A1**
(43) Veröffentlichungstag der Anmeldung: **06.04.2022**
(21) Anmeldenummer: 20199172.6
(22) Anmeldetag: 30.09.2020
(51) Int. Cl.: B29C 44/34, B29B 9/02, B29B 9/04, B29B 9/16, B29B 13/10, B29C 44/44, B29C 44/54, B29K 33/00

(54) **HERSTELLUNG VON KOMPLEXEN SCHAUM-FORMKERNEN MIT CLASS-A FÄHIGEN OBERFLÄCHEN**

(71) Anmelder: Evonik Operations GmbH, 45128 Essen (DE)
(72) Erfinder: KRAATZ, Dr., Amim, 64287 Damstadt (DE); LIEBL, Ina, 64347 Griesheim (DE)
(74) Vertreter: Evonik Patent Association

(57) **Zusammenfassung**

Die vorliegende Erfindung betrifft ein Verfahren zur Herstellung von komplexen Hartschaumkernen aus Polymethacrylimid (PMI) Granulat.

## Beschreibung

Die vorliegende Erfindung betrifft ein Verfahren zur Herstellung von komplexen Hartschaumkernen aus Polymethacrylimid (PMI) Granulat.

### Stand der Technik

Polymethacrylimid-Schaumstoffe (PMI-Schaumstoffe) sind bereits seit langer Zeit bekannt. Unter dem Handelsnahmen ROHACELL^{®} finden diese Schaumstoffe insbesondere im Bereich der Schichtwerkstoffe viele Anwendungen (Laminate, Composite, Schaumstoffverbundkörper, Sandwichkonstruktionen, Sandwiches). Schichtwerkstoffe sind Formkörper, die aus einer außen liegenden Deckschicht und einem innen liegenden Kemwerkstoff aufgebaut sind. Als Deckschichten verwendet man Materialien, die uni- oder multiaxial äußerst hohe Zugkräfte aufnehmen können. Beispiele sind Glas- und Kohlefasergewebe oder auch Aluminiumplatten, die mit Klebeharzen auf dem Kemwerkstoff fixiert werden. Als Kemwerkstoffe werden bevorzugt Materialien mit geringen Raumgewichten, typischerweise im Bereich von 30 kg/m³ und 200 kg/m³ eingesetzt.

Die Herstellung von PMI-Schäumen mit kleinen Poren gelang durch die Verwendung von unlöslichen Nukleierungsmitteln (DE 10212235.0). Die Verwendung von unlöslichen Nukleierungsmitteln im Gussverfahren bringt jedoch erheblichen Mehraufwand bei der Produktion mit sich. Das zu polymerisierende Monomergemisch hat eine Dichte von nur ca. 0,8 g/cm³. Als Nukleierungsmittel in Betracht kommende Substanzen wie beispielsweise Siliziumdioxid, Zinksulfid, Natrium- oder Kaliumchlorid haben höhere Dichten als das Monomergemisch und setzen sich daher sofort ab. Ein Schaum mit gleichmäßiger Porenstruktur kann nur erhalten werden, wenn die Absetzung des Nukleierungsmittels unterdrückt wird. Dazu müssen dem Monomergemisch Antiabsetzmittel wie beispielsweise Aerosil und Ruße oder Verdickungsmittel wie lösliche, hochmolekulare Polymere zugesetzt werden und diese aufwändig gemeinsam mit dem Nukleierungsmittel in die Gemische eingearbeitet werden.

Feinporige Schäume auf der Basis von PMI wurden darüber hinaus in EP 532023 beschrieben (Vergleichsbeispiel 7). Das dort beschriebene Verfahren weist aber verschiedene, gravierende Nachteile auf. Zur Polymerisation wurden relativ hohe Konzentrationen an Initiator verwendet, so dass das resultierende Polymer trotz der Herstellung im Gussverfahren nur ein gewichtsmittleres Molekulargewicht im Bereich von 50-500 kDa aufweist. Weiterhin wurde der Rezeptur kein Vemetzer zugesetzt. Die resultierenden Schäume haben aus diesen Gründen nur eine niedrige Wärmeformbeständigkeit und ein schlechtes Kriechverhalten. Feinporige Schaumstoffe sind bekannt und werden unter dem Namen ROHACELL^{®} von der Evonik Industries AG vertrieben. Es ist möglich, eine Feinporigkeit durch eine Variation von Treibmitteln oder durch den Zusatz von unlöslichen Nukleierungsmitteln zu erreichen. Problematisch ist jedoch, dass die über eine Variation der Treibmittel erreichte Feinporigkeit nicht immer ausreichend ist.

Aufschäumverfahren für Polymere zur Herstellung von Hartschaumstoffen sind allgemein bekannt. Bekannte Prozesse beinhalten u.a. kontinuierliche Extrusionsprozesse in denen Polymere in einem Extruder aufgeschmolzen und mit Treibmittel beladen werden, wobei sie beim Austritt aus der Düse durch den Druckabfall aufschäumen. Auch Partikelschaumprozesse in denen treibmittelbeladene Polymergranulate in einer Form durch Energieeinwirkung (thermisch, Wasserdampf) aufgeschäumt werden und Batchprozesse in denen Polymerisate unter Druck mit z.B. CO₂ oder N₂ unter überkritischen Bedingungen beladen werden und bei Druckabfall aufschäumen sind bekannt. Außerdem sind Blockschaum-Prozesse, in denen Polymerisate, die mit Treibmitteln beladen sind durch Erhitzen in einem Ofen über die Glastemperatur erweicht werden und durch das enthaltene Treibmittel aufschäumen bekannt.

Die o.g. Blockschaumprozesse, in denen eine mit Treibmitteln beladene Polymerisatplatte thermisch über den T_{g} des Polymers erhitzt wird, wird u.a. für die Herstellung von PMI oder PMMA basierten Hartschäumen verwendet (DE2726259, DE1817156, EP3277748). Ein Grund für die Verwendung dieser Materialien ist die gute Einstellbarkeit der Dichte der erhaltenen Schaumstoffe über die Schäumtemperatur bzw. die Schäumdauer. Weiterhin sind die o.g. Hartschaumstoffe basierend auf PMI oder PMMA wirtschaftlich nicht durch andere Herstellprozesse zu erhalten, da sie durch die hohen Molekulargewichte, welche für die mechanischen Eigenschaften von Wichtigkeit sind, nicht über Extrusionsprozesse herstellbar sind.

Um das Gewicht von Fahrzeugen zu minimieren werden heutzutage zunehmend Composite Strukturen (z.B. Carbon, Glasfaser) eingesetzt. In nicht-sichtbaren Strukturbauteilen werden immer häufiger Schaumstrukturen (z.B. aus ROHACELL^{®} Triple F) mit Deckschichten aus z.B. Carbon, Glasfaser oder Metallen verbunden und so zu Sandwichbauteilen aufgebaut. Diese Sandwichbauteile liefern in vielen Fällen das beste Verhältnis zwischen Gewicht und mechanischer Perfomance. Aufgrund der porösen und "rauen" Oberfläche der eingesetzten Kernwerkstoffe (Schäume, Waben) sind die Anwendungen auf nicht-sichtbare Bauteile beschränkt.

Das Kernmaterial beeinflusst die Leistungsfähigkeit von Sandwichkonstruktionen stark. Über die mechanische Performance hinaus sollten der Sandwichkern bzw. das gesamte Sandwichbauteil wirtschaftlich produziert werden können. Bisher werden polymere Hartschaumstoffe für Sandwichbauteile meist in Blöcken hergestellt und durch einen weiteren Bearbeitungsschritt, etwa CNC-Fräsen, in die gewünschte Form gebracht. Durch das hohe Maß an manueller Formung und den relativ hohen Verschnitt sind die Herstellkosten für eine Produktion in großem Maßstab zu hoch.

Sichtbare (Exterieur) Bauteile mit komplexen Geometrien aus Composite Materialien, können heutzutage nur sehr aufwendig hergestellt werden. Häufig müssen zweischalige Konstruktionen nachträglich verklebt werden.

Den Stand der Technik zur Herstellung von Exterieur Bauteilen basierend auf Composites stellt die monolithische Bauweise dar. Hierbei werden Composite Strukturen ohne Kernmaterial (monolithisch) hergestellt. Wenn es sich bei dem herzustellenden Bauteil um eine komplexe Form handelt (z.B. Heckspoiler bei einem Sportwagen), dann werden eine monolithische Ober- und eine monolithische Unterschale hergestellt, die dann verklebt werden. Anschließend müssen die Oberflächen (vor allem die Klebenähte) geschliffen werden. Es folgt die sehr aufwendige Lackierung des Bauteils.

Mit dem In-Mold Foaming Verfahren können ROHACELL^{®} Triple F (Evonik Industries AG, Deutschland) Sandwichkerne für Faserverbundbauteile in der Form geschäumt werden und komplexe, dreidimensionale Strukturkerne für CFK Sandwichbauteile für die industrielle Serienfertigung hergestellt werden, die aufgrund ihrer hohen Festigkeit und Temperaturbeständigkeit auch für effiziente Aushärteverfahren wie Hochdruck-RTM oder Nassimprägnierung geeignet sind. Für ROHACELL^{®} Triple F wird ein PMI Granulat in der gewünschten Dichte in einer Form zum fertigen Schaumstoffkern ausgeschäumt. Dabei können metallische Einsätze wie Gewinde-Inserts direkt während des Aufschäumprozesses integriert werden.

### Aufgabe

Aufgabe war es, ein wirtschaftliches Verfahren zur Schäumung von PMI-Schaumstoffen mit komplexen, dreidimensionalen Strukturkernen zu entwickeln. Insbesondere sollte die Limitierung des Designs behoben und die Herstellkosten durch Wegfall von Prozessschritten (Herstellung von Ober- und Unterschale mit anschließender Verklebung) reduziert werden.
Durch die zweischalige Bauweise sind Limitierungen im Design gegeben. Gerade aber für Exterieur Bauteile spielt das Design eine entscheidende Rolle.
Aufgabe war auch die Reduktion des finalen Gewichts von großvolumigen, komplexen Sandwichbauteilen, unter Verwendung von bereits etablierten Herstellungsprozesse (bei nicht-sichtbaren Strukturbauteilen) der Bauteile.
Die Integration von (metallischen) Inserts (z.B. zum Verschrauben der Bauteile) sollte zudem ermöglicht werden.
Eine weitere Aufgabe bestand darin, Schaumkerne mit besonders guter Oberflächenbeschaffenheit herzustellen, die für Exterieur und Interieur Bauteile verwendet werden können, insbesondere für die Verwendung als Class A Sichtbauteil.

### Lösung

Gelöst wird die Aufgabe durch das zur Verfügung stellen eines Verfahrens zur Herstellung von komplexen Hartschaumkernen aus Polymethacrylimid (PMI) Granulat, dadurch gekennzeichnet, dass
a) die Copolymerisat- Platte enthaltend Methacrylsäure und Methacrylnitril mit einer Zerkleinerungsmaschine zu einem Granulat mit einer mittleren Korngrößenverteilung dso zwischen 0,01 und 5 mm gemessen nach DIN ISO 9276-1 gemahlen wird
b) mittels eines Siebverfahrens fraktioniert wird und
   I) eine Fraktion mit einer mittleren Korngrößenverteilung d₅₀ zwischen 0,3 und 1 mm und
   II) eine Fraktion mit einer mittleren Korngrößenverteilung d₅₀ zwischen 1 und 4 mm und
   III) eine Fraktion mit einer mittleren Korngrößenverteilung d₅₀ zwischen 4 und 5 mm abgetrennt werden
c) die Fraktion II) in einer weiteren Mühle gemahlen und mittels Siebverfahren fraktioniert wird und die erhaltene Fraktion I') mit einer mittleren Korngrößenverteilung d₅₀ zwischen 0,3 und 1 mm abgetrennt wird
d) das in b) I) erhaltene Granulat ggf. zusammen mit der unter c) erhaltenen Fraktion I') einem In-Mold Foaming Prozess zugeführt wird.

Es wurde gefunden, dass mit dem erfindungsgemäßen Verfahren komplexe dreidimensionale Schaumkerne hergestellt werden können, die eine 100% geschlossene Zellstruktur aufweisen und eine extrem glatte Oberfläche besitzen. Hierzu wird ein spezielles ROHACELL^{®} Triple F Granulat der Firma Evonik Industries AG, Deutschland, eingesetzt, welches durch eine kleinere Korngröße des Ausgangsmaterials eine glatte Oberfläche im finalen Schaumkern erzeugt. Durch eine Komgrößenverteilung des PMI Ausgangsgranulats von 0,3 - 1 mm kann im anschließenden In-Mold Foaming Prozess (IMF) eine extrem glatte Oberfläche erzeugt werden.

Das erfindungsgemäß verwendete Material ist Polymethacrylimid (PMI). Solche PMI-Schäume werden auch als Hartschäume bezeichnet und zeichnen sich durch eine besondere Festigkeit aus. Die PMI-Schäume werden normalerweise in einem zweistufigen Verfahren hergestellt: a) Herstellung eines Gusspolymerisats und b) Aufschäumen dieses Gusspolymerisats. Nach Stand der Technik werden diese dann in die gewünschte Form geschnitten bzw. gesägt. Eine Alternative, die technisch noch weniger etabliert ist, ist das In-Mold Foaming Verfahren, für das das erfindungsgemäße Verfahren eingesetzt werden kann.

Zur Herstellung des PMI werden zunächst Monomergemische, welche Methacrylsäure und Methacrylnitril, vorzugsweise in einem Molverhältnis zwischen 2:3 und 3:2, als Hauptbestandteile enthalten, hergestellt. Zusätzlich können weitere Comonomere verwendet werden, wie z.B. Ester der Acryl- oder Methacrylsäure, Styrol, Maleinsäure oder Itaconsäure bzw. deren Anhydride oder Vinylpyrrolidon. Dabei sollte der Anteil der Comonomeren jedoch nicht mehr als 30 Gew% betragen.

Bevorzugt wird ein Gemisch aus
(A) 30-69 Gew% Methacrylsäure,
   30-60 Gew% Methacrylnitril,
   0-30 Gew% weiteren vinylisch ungesättigten Monomeren,
(B) 0-15 Gew% tert-Butylmethacrylat und/oder tert-Butylacrylat,
(C) 0,01-10 Gew% Treibmittel,
(D) 0,01-10 Gew% Vernetzern, d.h.
   (D1) radikalisch polymerisierbaren, mehrfach ungesättigten Verbindungen und/oder
   (D2) ionischen Vernetzers in Form eines Salzes, enthaltend ein mindestens zweiwertiges Metallkation, das in der Monomermischung löslich ist,
(E) 0,01 bis 2 Gew% Polymerisationsinitiatoren,
(F) 0 bis 20 Gew% an üblichen Zusatzstoffen wie z.B. Antistatika, Antioxidantien, Entformungsmittel, Schmiermittel, Farbstoffe, Flammschutzmittel, Fließverbesserungsmittel, Füllstoffe, Lichtstabilisatoren und organische Phosphorverbindungen, wie Phosphite oder Phosphonate, Pigmente, Trennmittel, Verwitterungsschutzmittel und Weichmacher in Substanz zu einer Platte polymerisiert.

Bevorzugt werden 1,0-4,99 Gew% tert-Butylmethacrylat und/oder tert-Butylacrylat verwendet. Für gleichmäßig und kontrolliert schäumbare Polymerisate müssen bevorzugt 0,05-3 Gew% Vernetzer zugegeben werden. Für eine gute Schäumung müssen zudem bevorzugt 2-8 Treibmittel zugegeben werden.

Damit erhält man feinporige Schäume, deren Dichte im gewünschten Bereich zwischen 30 und 300 kg/m³ liegen.

Beispiele für die unter (A) genannten weiteren vinylisch ungesättigten Monomere sind: Acryl- oder Methacrylsäure sowie deren Ester mit niedrigen Alkoholen mit 1 - 4 C-Atomen, Styrol, Maleinsäure oder deren Anhydrid, Itakonsäure oder deren Anhydrid, Vinylpyrrolidon, Vinylchlorid und/oder Vinylidenchlorid. Der Anteil der Comonomere, die sich nicht oder nur sehr schwer zu Anhydrid oder Imid cyclisieren lassen, soll 30 Gew%, vorzugsweise 20 Gew% und besonders bevorzugt 10 Gew%, bezogen auf das Gewicht der Monomeren, nicht übersteigen.

Das Gemisch für die Copolymerisation enthält ferner Treibmittel, die sich bei Temperaturen von etwa 150 bis 250 °C entweder zersetzen oder verdampfen und dabei eine Gasphase bilden. Die Polymerisation erfolgt unterhalb dieser Temperatur, so dass das Gusspolymerisat ein latentes Treibmittel enthält. Die Polymerisation findet zweckmäßig in Blockform zwischen zwei Glasplatten statt.

Als Treibmittel (C) können folgende Verbindungen oder Gemische daraus verwendet werden: Formamid, Ameisensäure, Harnstoff, Itakonsäure, Zitronensäure, Dicyandiamid, Wasser, Monoalkylharnstoffe, Dimethylharnstoff, 5,5'-Azo-bis-5-äthyl-1,3-dioxan, 2,2'-Azo-bis-isobuttersäurebutylamid, 2,2'-Azo-bis-isobuttersäure-N-diethylamid, 2,2',4,4,4',4'-Hexamethyl-2,2'-azopentan, 2,2'-Azo-bis-2-methyl-propan, Dimethylcarbonat, Di-tert-butycarbonat, Acetoncyanhydrincarbonat, Oxi-isobuttersäuremethylester-carbonat, N-Methylurethan, N-Ethylurethan, N-tert-butylurethan, Urethan, Oxalsäure, Maleinsäure, Oxi-isobuttersäure, Malonsäure, Cyanformamid, Dimethylmaleinsäure, Methantetracarbonsäuretetraäthylester, Oxamidsäure-n-butylester, Methantricarbonsäuretrimethylester, Methantricarbonsäuretriäthylester, sowie einwertige Alkohole aus 3-8 Kohlenstoffatomen wie z.B. Propanol-1, Propanol-2, Butanol-1, Butanol-2, tert-Butanol und iso-Butanol.

Den Rezepturen müssen geringe Mengen Vernetzer (D) zugesetzt werden. Eine leichte Vernetzung stabilisiert den Schaum während des Schäumvorgangs und ermöglicht so die Herstellung von homogenen Schäumen. Gleichzeitig werden die Wärmeformbeständigkeit und das Kriechverhalten des Schaums durch Vernetzer verbessert. Mögliche Vernetzer können in zwei Gruppen unterteilt werden: kovalente Vernetzer (D1), also einpolymerisierbare mehrfach ungesättigte Verbindungen. Als derartige Monomere können z. B. Allylacrylat, Allylmethacrylat, Allylacrylamid, Allylmethacrylamid, Methylen-bis-acrylamid oder -methacrylamid, Diethylenbis(allylcarbonat), Ethylenglykoldiacrylat oder -dimethacrylat, Diethylenglykoldiacrylat oder -dimethacrylat, Triethylenglykoldiacrylat oder dimethacrylat,Tetraethylenglykoldiacrylat oder -dimethacrylat, Tripropylenglykoldiacrylat oder -dimethacrylat, 1,3-Butandioldiacrylat oder -dimethacrylat, 1,4-Butandioldiacrylat oder -dimethacrylat, Neopentyldioldiacrylat oderdimethacrylat, Hexandiol-1,6-diacrylat oder -dimethacrylat, Trimethylolpropandiacrylat oderdimethacrylat, Trimethylolpropantriacrylat oder -trimethacrylat, Pentaerythrittriacrylat odertrimethacrylat, Pentaerythrittetraacrylat oder -tetramethacrylat, die Pentaerythritderivate jeweils ggf. auch als technisches Gemisch aus tri- und tetrafunktionellen Verbindungen, sowie Triallylcyanurat oder Triallylisocyanurat verwendet werden. Als weitere Gruppe kommen ionische Vernetzer (D2) in Betracht. Dies sind mehrwertige Metallkationen, die ionische Brücken zwischen den Säuregruppen der Copolymere ausbilden. Beipiele sind unter anderem die Acrylate oder Methacrylate der Erdalkalimetalle oder des Zinks. Bevorzugt sind Zn- und Mg-(meth)acrylat. Die (Meth)acrylatsalze können auch durch Auflösen z.B. von ZnO oder MgO im Monomeransatz hergestellt werden.

Als Initiatoren (E) werden Verbindungen und Initiatorsysteme verwendet, die die radikalischen Polymerisationen in Gang setzen können. Bekannte Verbindungsklassen sind Peroxide, Hydroperoxide, Peroxodisulfate, Percarbonate, Perketale, Peroxiester, Wasserstoffperoxid und Azoverbindungen. Beispiele für Initiatoren sind Wasserstoffperoxid, Dibenzoylperoxid, Dicyclohexylperoxodicarbonat, Dilaurylperoxid, Methylethylketonperoxid, Acetylacetonperoxid, Di-tert-butylperoxid, tert-Butylhydroperoxid, Cumolhydroperoxid, t-Butylperoctanoat, tert-Butylper-2-ethylhexanoat, tert-Butylperneodecanoat, tert-Amylperpivalat, tert-Butylperpivalat, tert-Butylperbenzoat, Lithium-, Natrium-, Kalium- und Ammoniumperoxodisulfat, Azoisobutyronitril, 2,2-Azobisiso-2,4-dimethylvaleronitril, 2,2-Azobisisobutyro-nitril, 2,2'-Azo-bis(2-amidinopropan)dihydrochlorid, 2-(Carbamoylazo)isobutyronitril und 4,4'-Azobis(cyanovaleriansäure). Gleichfalls geeignet sind Redoxinitiatoren (H. Rauch-Puntigam, Th. Völker, Acryl- und Methacrylverbindungen, Springer, Heidelberg, 1967 oder Kirk-Othmer, Encyclopedia of Chemical Technology, Vol. 1, Seiten 286 ff, John Wiley & Sons, 1New York, 1978). Es kann günstig sein, Initiatoren und Initiatorsysteme mit unterschiedlichen Zerfallseigenschaften bezüglich Zeit und Temperatur zu kombinieren. Bevorzugt werden die Initiatoren (E) in Mengen von 0,01 bis 2 Gew%, besonders bevorzugt von 0,15 bis 1,5 Gew% bezogen auf das Gesamtgewicht der Monomere eingesetzt.

Des Weiteren können den Gemischen übliche Zusatzstoffe (F) zugesetzt werden. Hierzu gehören unter anderem Antistatika, Antioxidantien, Entformungsmittel, Schmiermittel, Farbstoffe, Fließverbesserungsmittel, Füllstoffe, Lichtstabilisatoren und organische Phosphorverbindungen, wie Phosphite oder Phosphonate, Pigmente, Trennmittel, Verwitterungsschutzmittel und Weichmacher. Weitere mögliche Zusätze sind Flammschutzmittel. Neben halogenhaltigen Flammschutzmitteln, die teilweise Antimonoxide enthalten, können auch phosphorhaltige Verbindungen eingesetzt werden. Phosphorhaltige Verbindungen sind wegen der geringeren Rauchgastoxizität im Brandfall bevorzugt. Zu den Phosphorverbindungen gehören unter anderem Phosphane, Phosphanoxide, Phosphoniumverbindungen, Phosphonate, Phosphite und/oder Phosphate. Diese Verbindungen können organischer und/oder anorganischer Natur sein, wie beispielsweise Phosphorsäuremonoester, Phosphonsäuremonoester, Phosphorsäurediester, Phosphonsäurediester und Phosphorsäuretriester sowie Polyphosphate.

Die Herstellung solcher PMI-Halbzeuge ist dem Fachmann grundsätzlich bekannt und kann beispielsweise in EP 1 444 293, EP 1 678 244 oder WO 2011/138060 nachgelesen werden. Als PMI-Halbzeuge seien insbesondere solche genannt, die in aufgeschäumter Form unter dem Produktnamen ROHACELL^{®} von der Firma Evonik Industries AG vertrieben werden. Bezüglich Herstellung und Verarbeitung sind zu den PMI-Schäumen Acrylimid-Halbzeuge (PI-Halbzeuge) als Analoga anzusehen. Aus toxikologischen Gründen sind diese jedoch gegenüber anderen Schaummaterialien deutlich weniger bevorzugt.

Die so erhaltene Platte kann gegebenenfalls getempert oder direkt dem Verfahrensschritt a) zur Zerkleinerung zugeführt werden.

Die PMI-Copolymerisatplatten werden erfindungsgemäß in Schritt a) mit einer Zerkleinerungsmaschine gemahlen.

Die in Schritt a) verwendeten Zerkleinerungsmaschinen sind ausgewählt aus der Gruppe der Mühlen, bevorzugt Hammermühlen, Stachelwalzenbrecher, Riffelwalzenbrecher, Scheibenmühlen, Shredder, Prallscheibenmühlen oder Schneidmühle.

Die Platten werden zu einem Granulat mit einer mittleren Korngrößenverteilung d₅₀ zwischen 0,01 und 5 mm gemessen nach DIN ISO 9276-1 (Ausgabedatum 2004-09) gemahlen.

Das erhaltene Granulat wird in Schritt b) mittels eines Siebverfahrens fraktioniert.

Geeignete Siebverfahren sind dem Fachmann bekannt. Bevorzugt wird mit Plansiebmaschinen, Vibrationssiebmaschinen, Kreisschwing-Siebmaschinen, Linearschwingsiebmaschinen oder Bananensiebmaschinen fraktioniert.

Die Fraktionen I), II) und III) werden verschiedenen Verfahrensschritten zugeführt, wobei

Fraktion I) Granulat mit einer mittleren Korngrößenverteilung d₅₀ zwischen 0,3 und 1 mm und Fraktion II) Granulat mit einer mittleren Korngrößenverteilung d₅₀ zwischen 1 und 4 mm und Fraktion III) Granulat mit einer mittleren Korngrößenverteilung d₅₀ zwischen 4 und 5 mm enthält.

Die Fraktion I) kann direkt dem In-Mold Foaming Prozess zugeführt werden.

Erfindungsgemäß wird das Granulat der Fraktion II) aus Verfahrensschritt b) in Verfahrensschritt c) in einer weiteren Mühle gemahlen und mittels Siebverfahren fraktioniert. Die dabei erhaltene Fraktion I') mit einer mittleren Korngrößenverteilung dso zwischen 0,3 und 1 mm wird abgetrennt.

Besonders bevorzugt wird die Fraktion I) zusammen mit dem Granulat der Fraktion I') aus Verfahrensschritt c) dem In-Mold Foaming Prozess zugeführt.

Im zweiten Mahlschritt, dem Schritt c) kann mit Mahlmühlen, ausgewählt aus der Gruppe der Kugelmühlen, Trommeltrockenmühlen oder Walzenstühle, gemahlen werden. Sollten in diesem Mahlschritt Walzenstühle verwendet werden, wird mit profilierten Walzen gemahlen. Die Profilierung der Walzen wird abgestimmt auf gewünschte Größe des Granulats.

Alternativ kann das Granulat der in Schritt b) erhaltene Fraktion III) mit einer mittleren Korngrößenverteilung dso zwischen 4 und 5 mm dem ersten Zerkleinerungsschritt, dem Schritt a) erneut zugeführt werden.

In Abhängigkeit von der gewünschten Enddichte und den mechanischen Anforderungen an das Bauteil ergibt sich eine individuelle Schüttdichte für das vorgeschäumte Granulat.

Das PMI Granulat wird auf eine Schüttdichte von 95 - 125 kg/m³, bevorzugt 95 - 115 kg/m³, besonders bevorzugt 105 - 115 kg/m³ vorgeschäumt, wenn das Bauteil auf eine Enddichte von 105 - 115 kg/m³, bevorzugt 110 kg/m³ formgeschäumt wird.

Zur Herstellung von komplexen Hartschaumkernen aus PMI wird das vorgeschäumte PMI Granulat einem Formschäumwerkzeug zugeführt. Bei Temperaturen von 200-250°C, bevorzugt bei 230-240°C, über 60 -120 min, bevorzugt 75 -100 min (Aufheizen und Haltezeit), formgeschäumt.

Das Bauteil wird über 20 bis 80 min, bevorzugt über 30 bis 65 min auf 80 -110°C, bevorzugt auf 90 -105°C abgekühlt.

Der Pressendruck liegt während des Formschäumprozesses bei 100-140 t, bevorzugt bei 120 t.

Für höhere Bauteildichten wird auf entsprechend höhere Schüttdichten vorgeschäumt, bei entsprechend angepassten Temperaturen und Drücken formgeschäumt.

Beispielsweise wird das PMI Granulat auf eine Schüttdichte von 170 -195 kg/m³, bevorzugt 175 - 185 kg/m³, vorgeschäumt, wenn das Bauteil auf eine Enddichte von 170- 190 kg/m³, bevorzugt 180 kg/m³ formgeschäumt wird.

Zur Herstellung von komplexen Hartschaumkernen aus PMI wird das vorgeschäumte PMI Granulat einem Formschäumwerkzeug zugeführt. Bei Temperaturen von 200-250°C, bevorzugt bei 225-235°C, über 40 -100 min, bevorzugt 45 -55 min (Aufheizen und Haltezeit), formgeschäumt.

Das Bauteil wird über 5 bis 40 min, bevorzugt über 10 bis 20 min auf 80 -120°C, bevorzugt auf 100 -110°C abgekühlt.

Der Pressendruck liegt während des Formschäumprozesses bei 10-40 t, bevorzugt bei 29 t.

Der erhaltene Schaumkern, weist eine geschlossene Oberfläche mit minimaler Rauigkeit auf. Er weist eine 100% geschlossene Zellstruktur auf.

Zudem ist keine Nachbehandlung der Schaumoberfläche, beispielsweise das Sandstrahlen, nötig.

Die resultierenden mechanischen Eigenschaften des erfindungsgemäßen Materials entsprechen den Anforderungen an Composite-Bauteile. Sie erlauben es, hohe Drücke und Temperaturen in nachfolgenden Verarbeitungsprozessen aufzubringen.

Somit ist es möglich, zur Herstellung der Compsite Bauteile die bereits etablierten Verarbeitungsverfahren wie z.B. Hochdruck RTM, Nass-Verpressen, Autoklav oder Infusionsverfahren einzusetzen.

Bevorzugt wird der komplexe Polymethacrylimid-Hartschaumkern beim Formschäumen mit Inserts, vorzugsweise metallischen Inserts, versehen.

In einer weiteren Ausführungsform wird der komplexe Polymethacrylimid-Hartschaumkern nach dem Formschäumen mit Decklagen versehen. Bevorzugt werden Deckschichten aus Carbon, Glasfaser oder Metallen, insbesondere Glas- und Kohlefasergewebe oder auch Aluminiumplatten verwendet.

Die Verwendung der erfindungsgemäß hergestellten komplexen Polymethacrylimid-Hartschaumkernen ist breit. Bevorzugt wird es wegen der hervorragenden Oberflächenbeschaffenheit für Exterieur und Interieur Bauteile verwendet. Eine besonders bevorzugte Anwendung ist daher die Verwendung als Class A Sichtbauteil.

Der Ausdruck Class A bezeichnet sichtbare (Freiform)-Flächen im Exterieur- und Interieur-Bereich der Produktentwicklung. Hauptsächlich wird er in der Automobilentwicklung verwendet. Mit Class A bezeichnete Flächen weisen meistens Krümmungsstetigkeit auf.

Die Kategorisierung von Oberflächen in "Class A", "Class B" und "Class C" wird vorgenommen, um die Flächen hinsichtlich ihres Verwendungszweckes einordnen zu können.

Unter "Class B"-Flächen versteht man die im Normalfall für den Benutzer nicht sichtbaren Innenflächen von Class A-Flächen sowie die tragende Struktur des Objektes.

Die in Schritt II) erhaltene Fraktion mit einer mittleren Korngrößenverteilung d₅₀ zwischen 1 und 4 mm kann ebenfalls abgetrennt und direkt einem herkömmlichen In-Mold Foaming Prozess zugeführt werden, der zur Herstellung von Class B Bauteilen ausgelegt ist.

Durch den Einsatz eines geeigneten Schaumkerns können deutlich komplexere Exterieur Bauteile (mehr Freiheiten im Design) einfacher und kostengünstiger hergestellt werden. Durch die Integration von (metallischen) Inserts lassen sich die Bauteile einfach verbinden, wie z.B. Spoiler an einer Heckklappe.

Allgemein können die erfindungsgemäß hergestellten komplexen Polymethacrylimid-Hartschaumkerne in der Automobilindustrie, der Luft- und Raumfahrt, der Medizintechnik, dem Sport und Lifestyle, dem Schiffsbau und dem Schienenfahrzeugbau verwendet werden.

### Beispiel

### Schäumen eines Schaukerns mit besonders glatter, homogener Oberfläche mit vorgeschäumtem Granulat

Als PMI-Granulat wird ein Material verwendet, dass unter dem Produktnamen ROHACELL^{®} Triple F von der Firma Evonik Industries AG, Deutschland vertrieben wird.

Das Granulat wird aus einer nicht vorgeschäumten, auspolymerisierten Copolymerisatplatte durch Zerkleinerung hergestellt.

Der erste Zerkleinerungsschritt mit anschließender Siebung des Materials auf kleiner 5 mm, erfolgt hierbei mittels einer Schneidmühle (Fa. Pallmann PS-A 300x 300) und dient zur Vorzerkleinerung des Materials für die nachfolgenden Arbeitsschritte.

Das hier verwendete Granulat liegt nach Fraktionierung mittels Sieben in nachfolgenden Fraktionen vor:
- eine Fraktion I) kleiner 0,3 mm
- eine Fraktion II) mit 0,3 und 1 mm
- eine Fraktion III) größer 1 mm

Für das zu schäumende Bauteil wird ausschließlich die Fraktion 0,3 bis 1,0 mm verwendet, da sich überraschenderweise gezeigt hat, dass man mit dieser Fraktion nicht nur gleichwertige mechanische Eigenschaften wie mit größeren Fraktionen, sondern auch besonders gleichmäßige, glatte Schaumoberfläche erzeugen kann. Mit solchen Oberflächen ist es möglich auch für Anwendungen wie Sichtbauteile im Automobilexterieur eingesetzt zu werden, da das Material "Class A" fähig ist. Dabei handelt sich um sichtbare Freiformflächen im Exterieur- und Interieur, welche zumeist Krümmungsstetigkeit aufweisen und Oberflächen mit hoher Effizienz und Qualität zeigen.

Die Fraktion II) mit einer mittleren Korngrößenverteilung d₅₀ zwischen 0,3 und 1 mm wird direkt dem Formschäumprozess zugeführt.

Die Fraktion III) mit einer mittleren Korngrößenverteilung d₅₀ größer 1 mm wird einem Walzenstuhl (Fa. Baumeister, Deutschland) zugeführt, um vorzugsweise ein Granulat mit der mittleren Korngrößenverteilung dso zwischen 0,3 und 1 mm zu erhalten. Das Material aus dem Walzenstuhl wird anschließend gesiebt, um die Zielfraktion abzutrennen.

Mittels eines Siebs werden die Fraktionen mit einer mittleren Korngrößenverteilung d₅₀ < 0,3 mm, 0,3 -1 mm und 1 -4 mm erhalten

Die Fraktion mit einer mittleren Korngrößenverteilung dso 1 - 4 mm wird erneut dem Walzenstuhl zugeführt.

Zunächst wird das Granulat vorgeschäumt, um einen möglichst hohen Formfüllgrad realisieren zu können. Die Vorschäumung erfolgt in einem IR-Ofen. Durch die Vorschäumung werden Roh- und Schüttdichte reduziert. Dies wird gesteuert durch Variation der Verweilzeit sowie der Temperatur. Die verwendeten Parameter waren hier eine Temperatur von ca. 185°C für eine Verweilzeit von ca. 3 min. Dies führt zu einer Reduktion der Schüttdichte auf 96 -105 kg/m³. Das Mahlgut wird mittels einer Dosierwaage auf ein Förderband verteilt. Das Förderband bringt das Granulat zum Vorschäumen in ein abgeschirmtes IR-Strahlerfeld, wo das Vorschäumen stattfindet. Danach erfolgt der Materialaustrag.

Das Formschäumwerkzeug besteht aus Aluminium und besitzt sechs Kavitäten, in denen die Schaumkerne im Schäumprozess gefertigt werden. Das Werkzeug wird mit einem Trennmittel behandelt und mit den einzuschäumenden Inserts für den Formschäumprozess vorbereitet. Das heizen erfolgt über Heizpatronen im Werkzeug und die Kühlung über Kühlplatten, die an der oberen - und unteren Pressfläche befestigt sind. Das Werkzeug wird über die hydraulische Presse gegen den auftretenden Schäumdruck mit einem Pressdruck von ca. 120 t zusammengehalten.

Die benötigte Granulatmenge für alle sechs Bauteile, die pro Zyklus gefertigt werden können, wird vor Verarbeitung mit einem Haftvermittler gemischt (5 Gew.-% DYNACOLL^{®} AC1750) und anschließend mittels Druckluftförderung in die Formkavitäten nacheinander eingeblasen, bis diese vollständig gefüllt sind. Dann werden alle Angüsse der Kavitäten verschlossen und das Werkzeug in der Presse positioniert und fixiert. Nun startet der Formschäumprozess, bei dem das Werkzeug auf 230-240°C über Heizpatronen aufgeheizt wird, das Aufheizen und die Haltezeit hier beträgt dabei 95 min. Anschließend wird die Heizung abgeschaltet und der Abkühlvorgang über die Kühlplatten eingeleitet, damit die Bauteile entformungstabil werden können, dies erfolgt solange bis das Werkzeug auf 95°C runtergekühlt ist. Anschließend kann das Werkzeug aus der Presse entnommen, geöffnet und die fertigen Schaumkerne nach Lösen der Inserthalterungen entformt werden.

Die Bauteile sind nun ohne weitere Bearbeitung für die weitere Verarbeitung zu Compositbauteilen mit Class A Anforderungen einsatzbereit und können in den dafür gängigen Verfahren, wie z.B. RTM, weiterverarbeitet werden.

## Patentansprüche

1. Verfahren zur Herstellung von komplexen Hartschaumkernen aus Polymethacrylimid (PMI) Granulat, **dadurch gekennzeichnet, dass**
a) die Copolymerisat- Platte enthaltend Methacrylsäure und Methacrylnitril mit einer Zerkleinerungsmaschine zu einem Granulat mit einer mittleren Korngrößenverteilung dso zwischen 0,01 und 5 mm gemessen nach DIN ISO 9276-1 gemahlen wird
b) mittels eines Siebverfahrens fraktioniert wird und
I) eine Fraktion mit einer mittleren Korngrößenverteilung d₅₀ zwischen 0,3 und 1 mm und
II) eine Fraktion mit einer mittleren Korngrößenverteilung d₅₀ zwischen 1 und 4 mm und
III) eine Fraktion mit einer mittleren Korngrößenverteilung d₅₀ zwischen 4 und 5 mm abgetrennt werden
c) die Fraktion II) in einer weiteren Mühle gemahlen und mittels Siebverfahren fraktioniert wird und die erhaltene Fraktion I') mit einer mittleren Korngrößenverteilung d₅₀ zwischen 0,3 und 1 mm abgetrennt wird
d) das in b) I) erhaltene Granulat ggf. zusammen mit der unter c) erhaltenen Fraktion I') einem In Mold Foaming Prozess zugeführt wird.

2. Verfahren nach Anspruch 1, **dadurch gekennzeichnet, dass** in Schritt a) mit Zerkleinerungsmaschinen, ausgewählt aus der Gruppe der Mühlen, bevorzugt Hammermühlen, Stachelwalzenbrecher, Riffelwalzenbrecher, Scheibenmühlen, Shredder, Prallscheibenmühlen oder Schneidmühle, zerkleinert wird.

3. Verfahren nach Anspruch 1, **dadurch gekennzeichnet, dass** in Schritt c) mit Mahlmühlen, ausgewählt aus der Gruppe der Kugelmühlen, Trommeltrockenmühlen oder Walzenstühle, gemahlen wird.

4. Verfahren nach Anspruch 3, **dadurch gekennzeichnet, dass** in Schritt c) mit Walzenstühlen mit profilierten Walzen gemahlen wird.

5. Verfahren nach Anspruch 1, **dadurch gekennzeichnet, dass** die in Schritt b) III) erhaltene Fraktion Schritt a) zugeführt wird.

6. Verfahren nach Anspruch 1, **dadurch gekennzeichnet, dass** die in Schritt b) II) erhaltene Fraktion mit einer mittleren Korngrößenverteilung dso zwischen 1 und 4 mm abgetrennt und direkt einem In-Mold Foaming Prozesse zugeführt wird.

7. Verfahren nach Anspruch 1, **dadurch gekennzeichnet, dass** das PMI Granulat auf eine Schüttdichte von 95 -195 kg/m³ vorgeschäumt wird.

8. Verfahren nach Anspruch 7, **dadurch gekennzeichnet, dass** das PMI Granulat auf eine Enddichte von 105 -195 kg/m³ formgeschäumt wird.

9. Verfahren nach Anspruch 1, **dadurch gekennzeichnet, dass** das vorgeschäumte PMI Granulat einem Formschäumwerkzeug zugeführt wird, bei einem Pressendruck von 10 - 140 t und einer Temperatur von 200-250°C, über 40 -120 min formgeschäumt und nach einer Abkühlung über 5 - 80 min auf 80 -120°C, entnommen wird.

10. Verfahren gemäß Anspruch 1, **dadurch gekennzeichnet, dass** der komplexe Polymethacrylimid-Hartschaumkern beim Formschäumen mit Inserts versehen wird.

11. Verfahren gemäß Anspruch 1, **dadurch gekennzeichnet, dass** der komplexe Polymethacrylimid-Hartschaumkern nach dem Formschäumen mit Decklagen versehen wird.

12. Verwendung von komplexen Polymethacrylimid-Hartschaumkernen hergestellt nach einem Verfahren gemäß der Ansprüche 1-11 für Exterieur und Interieur Bauteile.

13. Verwendung von komplexen Polymethacrylimid-Hartschaumkernen hergestellt nach einem Verfahren gemäß der Ansprüche 1-11 in der Automobilindustrie, der Luft- und Raumfahrt, der Medizintechnik, dem Sport und Lifestyle, dem Schiffsbau und dem Schienenfahrzeugbau.

14. Verwendung von komplexen Polymethacrylimid-Hartschaumkernen hergestellt nach einem Verfahren gemäß der Ansprüche 1-11 in Class A Sichtbauteilen.
